# EUROPÄISCHE PATENTSCHRIFT

(11) **EP 2 641 876 B1**
(45) Veröffentlichungstag und Bekanntmachung des Hinweises auf die Patenterteilung: **17.05.2017**
(21) Anmeldenummer: 13158783.4
(22) Anmeldetag: 12.03.2013
(51) Int. Cl.: C02F 3/12, C02F 3/22, F16K 31/22, F16K 31/26

(54) **Biologische Klärvorrichtung**
Biological wastewater treatment device
Dispositif de traitement biologique des eaux usées

(30) Priorität: 19.03.2012 DE 202012100958 U
(43) Veröffentlichungstag der Anmeldung: 25.09.2013
(73) Patentinhaber: ATB Umwelttechnologien GmbH, 32457 Porta Westfalica (DE)
(72) Erfinder: Vogt, Torsten, 31710 Buchholz (DE); Zelmer, Torsten, 06542 Allstedt (DE)
(74) Vertreter: Ter Meer Steinmeister & Partner

(56) Entgegenhaltungen:
- WO-A1-95/11201
- US-A- 3 834 536

## Beschreibung

Die vorliegende Erfindung betrifft eine biologische Klärvorrichtung gemäß dem Oberbegriff des Anspruchs 1.

Derartige Klärvorrichtungen werden beispielsweise zur Abwassereinigung für Haushalte eingesetzt, die nicht an das öffentliche Kanalnetz angeschlossen sind. Sie umfassen eine Klärkammer, in der eine biologische Endreinigung des Abwassers mittels Belebtschlamm stattfindet. Eine Vorklärung des Abwassers kann in entsprechenden Vorklärkammern stattfinden, in denen Grobstoffe abgeschieden werden. In einer bekannten Bauform sind Vorklärkammer und biologische Klärkammer in einem gemeinsamen Behälter angeordnet und durch eine Trennwand getrennt, über welche die Klärkammer aus der Vorklärkammer beschickt wird.

Aus der biologischen Klärkammer muss das gereinigte Abwasser über einen Klarwasserauslass aus der Klärvorrichtung abgefördert werden. Eine geeignete Fördereinrichtung, wie etwa eine Pumpe, ein Druckluftheber oder dergleichen, ist über einen Ablauf mit dem Klarwasserauslass verbunden. Beispielsweise zeigt das deutsche Gebrauchsmuster DE 20 2004 020 436 U1 des Anmelders einen Ablauf, in welchen ein Pufferbehälter integriert ist. Dieser soll verhindern, dass während einer Schlammrückführung zurück in die Vorklärung geringe Wassermengen unbeabsichtigt über den Ablauf zum Klarwasserauslass geraten. Nach dem Abschalten der Fördereinrichtung kann das eingetretene Wasser durch den Einlass des Pufferbehälters wieder zurück zur Fördereinrichtung laufen.

Insbesondere bei der Förderung durch Druckluftheber soll jedoch vor einem kontinuierlichen Klarwasserabzug zunächst ein Spülstoß durchführt werden, durch den ein gewisses Belebtschlammvolumen oder Schlamm-Wasser-Gemisch aus dem Steigrohr des Hebers abgefördert wird. Ein Zurücklaufen in den Heber ist nachteilig und möglichst zu verhindern, da ein Großteil des Schlamms im Heber verbleiben würde. Vielmehr ist es erwünscht, das während dieses Spülstoßes geförderte Volumen abzuscheiden und zurück ins Belebtschlammbecken oder zur gezielten Rückführung des Überschussschlamms in eine Vorklärung fließen zu lassen. Die herkömmlichen Ablaufkonstruktionen bieten diese Möglichkeit nicht.

Aufgabe der vorliegenden Erfindung ist es daher, eine biologische Klärvorrichtung mit einem Ablauf der eingangs genannten Art zu schaffen, die es ermöglicht, ein in der Fördereinrichtung gegebenenfalls vorhandenes Belebtschlammvolumen oder Schlamm-Wasser-Gemisch vor dem Klarwasserabzug zuverlässig abzuscheiden, so dass lediglich sauberes Klarwasser in den Klarwasserauslass gelangt. Ein Zurückströmen in die Fördereinrichtung soll hierbei unterbleiben.

Diese Aufgabe wird erfindungsgemäß durch eine biologische Klärvorrichtung mit den Merkmalen des Anspruchs 1 gelöst.

Erfindungsgemäß weist der Pufferbehälter zwei Auslässe auf, nämlich einen höher gelegenen Auslass oberhalb seines Bodens, der zum Klarwasserauslass führt, und einen tiefer gelegenen Auslass, der beispielsweise am oder im Boden angeordnet ist. Dieser tiefer gelegene Auslass ist als Ventilsitz ausgebildet, der durch einen Ventilkörper zumindest teilweise verschließbar ist. Innerhalb des Pufferbehälters befindet sich ein Schwimmkörper, der zwischen einer unteren Stellung und einer angehobenen Stellung beweglich ist. Er ist mit dem Ventilkörper auf solche Weise mechanisch verbunden, das durch ein Anheben des Schwimmkörpers der Ventilkörper automatisch gegen den Ventilsitz bewegt wird. Dies kann durch eine unmittelbare Verbindung des Schwimmkörpers mit dem Ventilkörper erreicht werden. Denkbar ist allerdings auch ein Hebelmechanismus oder dergleichen, der die Bewegung des Schwimmkörpers in eine Ventilkörperbewegung umsetzt.

Ist der Pufferbehälter leer, liegt der Schwimmkörper in seiner unteren Stellung, und der tiefer gelegene Auslass ist geöffnet. Gelangt ein Flüssigkeitsvolumen in den Pufferbehälter, fließt es zunächst durch die tiefer gelegenen Auslass ab. Ist der Zufluss größer als der Abfluss, steigt der Flüssigkeitspegel im Pufferbehälter allmählich an und hebt den Schwimmkörper in seine angehobene Stellung. Durch diese Bewegung wird der Ventilkörper gegen den Ventilsitz bewegt und verschließt diesen zumindest weitgehend, so dass durch diesen tiefer gelegenen Auslass allenfalls noch eine sehr geringe Flüssigkeitsmenge austreten kann. Strömt weiter Flüssigkeit in den Pufferbehälter ein, steigt der Pegel über das Niveau des angehobenen Schwimmkörpers hinweg bis zum Klarwasserauslass. Das bedeutet, dass zunächst ein gewisses Flüssigkeitsvolumen im Pufferbehälter gesammelt wird, bevor ein Klarwasserabzug stattfinden kann.

Wird der Betrieb der Fördereinrichtung jedoch gestoppt, bevor der Pufferbehälter bis zum Niveau der angehobenen Stellung des Schwimmkörpers gefüllt ist, beispielsweise während eines Spülstoßes, gelangt das abgeförderte Flüssigkeitsvolumen nicht zum Klarwasserauslass, sondern strömt vollständig über den noch geöffneten tiefer gelegenen Auslass ab. Ein während des Spülstoßes abgefördertes Wasser-Schlamm-Gemisch kann daher über den tieferen Auslass abgeschieden werden, und anschließend kann die Fördereinrichtung kontinuierlich für den Klarwasserabzug betrieben werden.

Für die Funktion der Anlage ist es unwesentlich, dass während des Klarwasserabzugs eine relativ geringe Flüssigkeitsmenge auch durch den tiefer gelegenen Auslass abfließen kann, falls der Ventilkörper den Ventilsitz nicht vollständig abdichtet. Ein unvollständiges Verschließen des tiefer gelegenen Auslasses bietet hingegen den Vorteil, dass nach Beenden des Klarwasserabzugs der Pufferbehälter sich allmählich durch den tiefer gelegenen Auslass entleeren kann und der Pegel unterhalb des Niveaus des angehobenen Schwimmkörpers sinken kann. Sinkt dann der Pegel weiter zusammen mit dem Schwimmkörper, gibt der Ventilkörper den tiefer gelegenen Auslass wieder vollständig frei, und der Abfluss durch den tiefer gelegenen Auslass wird beschleunigt, so dass der Pufferbehälter sich dann schnell vollständig entleeren kann. Auf diese Weise wird vermieden, dass nach dem Klarwasserabzug der Schwimmkörper in seiner angehobenen Stellung bleibt und der tiefer gelegene Auslass dicht ist, so dass der Pufferbehälter sich nicht selbsttätig entleeren kann.

Der so aufgebaute Pufferbehälter bietet eine relativ einfache Möglichkeit zur Belebtschlammabscheidung aus der Ablaufleitung, ohne dass das Wasser-Schlamm-Gemisch in die Fördereinrichtung zurückströmt. Der freie Öffnungsquerschnitt des tiefer gelegenen Auslasses in geöffnetem Zustand kann so groß bemessen sein, dass ein Verstopfen dieses Auslasses durch im Schlamm enthaltene Grobstoffe vermieden wird.

Gemäß einer bevorzugten Ausführungsform der vorliegenden Erfindung ist der Ventilkörper unter dem Boden des Pufferbehälters angeordnet und mit dem Schwimmkörper durch ein Zugmittel wie etwa eine Kette oder eine Stange verbunden, durch welches der Ventilkörper beim Anheben des Schwimmkörpers von unten gegen den Ventilsitz gezogen wird. Das Zugmittel kann also in diesem Fall unmittelbar durch die Öffnung des tiefer gelegenen Auslasses hindurch geführt sein und den Ventilkörper, der unter dem Boden hängt, mit dem im Pufferbehälter befindlichen Schwimmkörper verbinden. Das Funktionsprinzip des Pufferbehälters wird auf diese Weise relativ einfach verwirklicht.

Vorzugsweise liegt der Schwimmkörper in der unteren Stellung auf einem Sitz am Boden über dem tiefer gelegenen Auslass auf, ohne diesen zu verschließen. Auf diese Weise kann das Wasser-Schlamm-Gemisch, das bei einem Spülstoß in den Pufferbehälter gelangt, problemlos unmittelbar durch den tiefer gelegenen Auslass abfließen, ohne durch den Schwimmkörper behindert zu werden.

Gemäß einer weiteren bevorzugten Ausführungsform ist innerhalb des Behälters eine Wippe mit einem kippbaren Balken angebracht, an dessen einen Ende der Schwimmkörper und an dessen anderem Ende ein Ventilkörper angebracht ist, der durch Anheben des Schwimmkörpers auf den Ventilsitz absenkbar ist.

Gemäß einer weiteren bevorzugten Ausführungsform der Erfindung ist der höher gelegene Auslass, der zum Klarwasserauslass führt, oberhalb der angehobenen Stellung des Schwimmkörpers angeordnet.

Gemäß einer weiteren bevorzugten Ausführungsform ist der Pufferbehälter zumindest an seiner Oberseite druckdicht verschlossen. Bei dieser Bauform ist es möglich, den Klarwasserabzug unter Druckbeaufschlagung des Pufferbehälters durchzuführen. Dies ist insbesondere bei Klärvorrichtungen vorteilhaft, bei denen ein Gefälle überwinden muss, um das Klarwasser aus der Anlage zu befördern.

Gemäß einer bevorzugten Ausführungsform der vorliegenden Erfindung führt der tiefer gelegene Auslass des Pufferbehälters zurück in die Klärkammer oder zu einer Vorklärkammer, aus welcher die Klärkammer mit vorgereinigtem Abwasser gespeist wird.

Vorzugsweise umfasst die Klärvorrichtung ferner einen Druckluftheber, mit einem Steigrohr, an dessen Auslass die Ablaufleitung angeschlossen ist. In dieser Anordnung wird der Pufferbehälter auf vorteilhafte Weise dazu verwendet, ein Wasser-Schlamm-Gemisch aus dem Steigrohr eines Drucklufthebers abzuscheiden, bevor der Klarwasserabzug stattfindet. Dieses Abscheiden kann auf die oben beschriebene Weise durch einen Spülstoß stattfinden, indem ein gewisses Flüssigkeitsvolumen zunächst in den Pufferbehälter gelangt und durch den tiefer gelegenen Auslass abströmen kann, bevor in einem anschließenden kontinuierlichen Betrieb des Drucklufthebers der Pufferbehälter vollständig gefüllt wird und das Klarwasser in den höher gelegenen Auslass des Behälters strömen kann.

Weiter vorzugsweise umfasst die Klärvorrichtung eine Druckluftquelle zur Druckluftbeaufschlagung des Drucklufthebers.

Gemäß einer weiteren bevorzugten Ausführungsform umfasst die Klärvorrichtung einen elektrischen Schalter, der dazu vorgesehen ist, beim Öffnen und/oder Schließen einen Schaltimpuls zur Änderung des Betriebszustands der Druckluftquelle zu erzeugen.

Vorzugsweise ist dieser elektrische Schalter in den Pufferbehälter integriert und ist durch Überschreiten einer vorbestimmten Füllhöhe des Pufferbehälters schließbar. In diesem Fall wird der Betriebszustand der Druckluftquelle umgeschaltet, sobald sich der Pufferbehälter zu einem bestimmten Maß gefüllt hat. Beispielsweise wird die Druckluftquelle von einem intermittierenden Betrieb in einen kontinuierlichen Betrieb umgeschaltet.

Der elektrische Schalter ist vorzugsweise ein Reed-Schalter, der auf einer Höhe oberhalb des tiefer gelegenen Auslasses angeordnet ist.

Gemäß einer weiteren bevorzugten Ausführungsform der Erfindung umfasst die Klärvorrichtung eine Pumpe, an deren Auslass die Ablaufleitung angeschlossen ist.

Im folgenden wird ein bevorzugtes Ausführungsbeispiel der Erfindung anhand der Zeichnung näher erläutert.
- Fig. 1 bis 5: sind schematische Darstellungen einer Ausführungsform der erfindungsgemäßen biologischen Klärvorrichtung in verschiedenen Betriebszuständen;
- Fig. 6 bis 10: sind schematische Detailansichten einer weiteren Ausführungsform des erfindungsgemäßen Pufferbehälters in verschiedenen Betriebszuständen; und
- Fig. 11 bis 15: sind schematische Detailansichten einer dritten Ausführungsform des erfindungsgemäßen Pufferbehälters in verschiedenen Betriebszuständen der biologischen Klärvorrichtung.

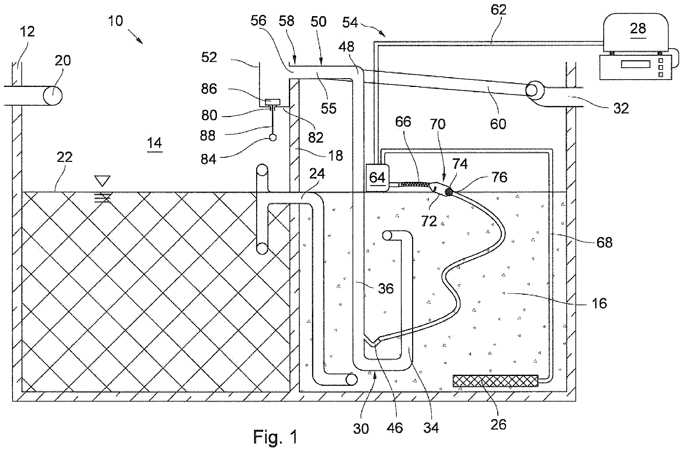

Die biologische Klärvorrichtung 10 aus Fig. 1 umfasst einen Klärbehälter 12 mit einer Vorklärkammer 14 (in Fig. 1 links) und einer biologischen Klärkammer, die im folgenden einfach als Klärkammer 16 bezeichnet werden soll. Die beiden Kammern 14,16 sind voneinander durch eine Trennwand 18 getrennt. Über einen Zulauf 20 gelangt Abwasser in die Vorklärkammer 14, wo sich Grobstoffe absetzen oder an der Wasseroberfläche 22 ablagern können. Die Endreinigung des Abwassers findet in der Klärkammer 16 statt, die Belebtschlamm enthält, der hier nicht näher dargestellt ist. Über ein Überlaufrohr 24 wird das vorgereinigte Abwasser aus der Vorklärkammer 14 in die Klärkammer 16 überführt, so dass die beiden Kammern 14,16 hydraulisch miteinander verbunden sind.

Zur Förderung der biologischen Klärung und zum Durchmischen des Inhalts der Klärkammer 16 ist in dieser ein Belüfter 26 angeordnet, der z. B. ein Tellerbelüfter oder ein Rohrbelüfter sein kann. Der Belüfter 26 wird durch Druckluft gespeist, die von einem Verdichter 28 zugeführt wird, der sich außerhalb des Klärbeckens 10 befindet.

Außerdem befindet sich in der Klärkammer 16 ein Druckluftheber 30, der dazu dient, Klarwasser aus der Klärkammer 16 einem Klarwasserauslass 32 zuzuführen. Überdies dient der Druckluftheber 30 auch zur Rückführung von überschüssigem Belebtschlamm in die Vorklärkammer 14. Der Heber 30 ist insgesamt etwa U-förmig ausgebildet, mit zwei vertikalen Rohrschenkeln 34,36, die an ihrem unteren Ende durch einen horizontalen Rohrabschnitt 38 miteinander verbunden sind. Während ein erster Schenkel 34 mit einem Klarwassereinlass 40 in der Nähe des Flüssigkeitsspiegels 42 der Klärkammer 16 ausgestattet ist, stellt der zweite Schenkel 36 des Drucklufthebers 30 ein Steigrohr dar, dessen unteres Ende einen Druckluftanschluss 46 aufweist und dessen oberes Ende 48 in eine Ablaufleitung 50 mündet, die zum Klarwasserauslass 32 führt. In die Ablaufleitung 50 ist ein Pufferbehälter 52 integriert, dessen Funktion später noch näher erläutert werden soll.

Der Pufferbehälter 52 befindet sich auf der anderen Seite der Trennwand 18 über der Vorklärkammer 14. Ein erster Abschnitt 54 der Ablaufleitung 50 führt vom oberen Ende 48 des Drucklufthebers 30 zu einem Einlass 56 im oberen Bereich des Pufferbehälters 52. Etwa auf der Höhe des Einlasses 56 befindet sich am Pufferbehälter 52 ein erster von zwei Auslässen, der im folgenden als höher gelegener Auslass 58 bezeichnet werden soll. Von diesem höher gelegenen Auslass 58 führt ein zweiter Abschnitt 60 der Ablaufleitung 50 zum Klarwasserauslass 32. Dieser zweite Abschnitt 60 ist leicht zum Klarwasserauslass 32 hin geneigt, um das Ablaufen des Klarwassers zu begünstigen.

Von dem Verdichter 28 führt eine Druckluftleitung 54 zum Belüfter 26 und zum Druckluftheber 30. Die Druckluftleitung 54 umfasst einen gemeinsamen Hauptleitungsabschnitt 62, der vom Verdichter 28 ausgeht und sich an einem Verteiler 64 in eine erste Zweigleitung 66 und eine zweite Zweigleitung 68 verzweigt. Die erste Zweigleitung 66 führt zum Druckluftanschluss 46 des Drucklufthebers 30, und die zweite Zweigleitung 68 führt zum Belüfter 26. Der Druckluftanschluss 46 ist auf einem etwas höheren Niveau angeordnet als der Belüfter 26.

Zur Verteilung des Druckluftstroms der Druckluftleitung 54 auf die erste Zweigleitung 66 und die zweite Zweigleitung 68 dient ein Schwimmventil 70, das innerhalb der ersten Zweigleitung 66 angeordnet ist. Dieses Schwimmventil 70 umfasst im wesentlichen eine Röhre 72 als schwimmfähigen Hohlkörper, deren Enden den Eingang und den Ausgang des Schwimmventils 70 bilden. Innerhalb der Röhre 72 befindet sich ein Ventilkörper 74 in Form einer magnetischen Kugel, die in der Röhre 72 hin und her rollen kann. Der stromabwärts gelegene Ausgang 76 der Röhre 72 bildet einen Ventilsitz, der durch diesen Ventilkörper 74 verschlossen werden kann, so dass das Schwimmventil 70 schließt und keine Druckluft mehr vom Verteiler 64 zum Druckluftanschluss 46 gelangen kann. Diese Situation wird dann erreicht, wenn die Röhre 72 leicht zu ihrem Ausgang hin abwärts geneigt ist, wie es in Fig. 1 dargestellt ist. Diese Ventilstellung wird bei einem relativ niedrigen Flüssigkeitspegel innerhalb der Klärkammer 16 eingenommen. Steigt der Flüssigkeitspegel 42 innerhalb der Klärkammer 16, so schwimmt das Schwimmventil 70 auf, und die Ventilkugel 74 kann den Ausgang 76 freigeben und rollt bis zu einem magnetischen Anschlag im Bereich des Eingangs der Röhre 72, so dass das Schwimmventil 70 auf Durchlass schaltet. Damit das Schwimmventil 70 die zum Umschalten erforderliche Kippbewegung ausführen und dem Flüssigkeitspegel 42 in der Klärkammer 16 folgen kann, ist ein Abschnitt der ersten Zweigleitung 66 zwischen dem Verteiler 64 und dem Schwimmventil 70 als flexibler Schlauch ausgebildet.

Ist der Verdichter 28 in Betrieb, werden beide Zweigleitungen 66,68 über die gemeinsame Hauptleitung 56 mit Druckluft beaufschlagt. In der Situation in Fig. 1, in der der Flüssigkeitspegel 42 in der Klärkammer 16 niedrig ist, ist jedoch die erste Zweigleitung 66 blockiert, da das Schwimmventil 62 sich in der zweiten Schaltstellung befindet, und es kann keine Druckluft zum Druckluftheber 30 gelangen. Somit wird ausschließlich der Belüfter 26 über die zweite Zweigleitung 68 mit Druckluft versorgt. Dies entspricht einer Belüftungsphase der biologischen Klärvorrichtung 10, in der der Inhalt der Klärkammer 16 intermittierend belüftet wird, während der Flüssigkeitspegel 42 relativ niedrig ist. Die intermittierende Belüftung wird durch eine entsprechende intermittierende Steuerung des Betriebs des Verdichters 28 erreicht. In der Belüftungsphase wechseln sich Perioden der Belüftung mit Belüftungspausen ab. Durch die Blockierung der ersten Zweigleitung 66 wird verhindert, dass der Inhalt der Klärkammer 16 durch den Druckluftheber 30 abgefördert wird.

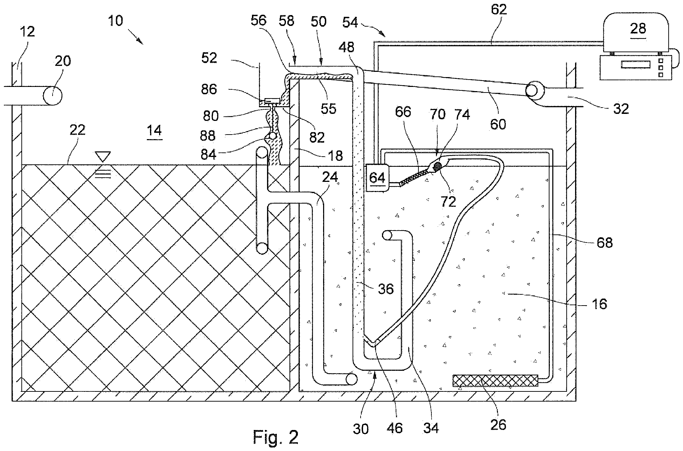

Fig. 2 stellt die Situation am Ende der Belüftungsphase dar. Der Flüssigkeitspegel 42 ist hier in der Klärkammer 16 und in der Vorklärkammer 14 so weit angestiegen, dass das Schwimmerventil 70 in eine Stellung gekippt ist, in der die Ventilkugel 74 aus ihrem Sitz am Ausgang 76 der Röhre 72 in Richtung des Eingangs gerollt ist und das Schwimmventil 70 öffnet. Wird der Verdichter 28 für einen weiteren Belüftungsstoß betrieben, gelangt die Druckluft über den Verteiler 64 und die erste Zweigleitung 66 zum Druckluftanschluss 46 des Drucklufthebers 30. Das Steigrohr 36 wird somit mit Druckluft beaufschlagt, und sein Inhalt wird nach oben aus seinem oberen Ende 48 in die Ablaufleitung 50 gedrückt und strömt in den Pufferbehälter 52.

Außer dem bereits beschriebenen höher gelegenen Auslass 58 weist der Pufferbehälter 52 einen tiefer gelegenen Auslass 80 im Boden 82 des etwa zylindrischen Pufferbehälters 52 auf. Dieser tiefer gelegene Auslass 80 ist als Ventilsitz ausgebildet und durch einen Ventilkörper 84 verschließbar, der sich unter den Boden 82 außerhalb des Pufferbehälters 52 befindet. Der Ventilkörper 84 ist von unten gegen den Ventilsitz des tiefer gelegenen Auslasses 80 anhebbar, so dass er den Auslass 80 nahezu vollständig verschließt. Dieses Anheben wird durch einen Schwimmkörper 86 bewirkt, der innerhalb des Pufferbehälters 52 angeordnet ist und mit dem Ventilkörper 84 durch eine senkrechte Stange 88 verbunden ist, die den tiefer gelegenen Auslass 80 durchläuft und darin frei beweglich ist. Wird der Schwimmkörper 86 angehoben, bewegt er den Ventilkörper 84 nach oben gegen den Ventilsitz.

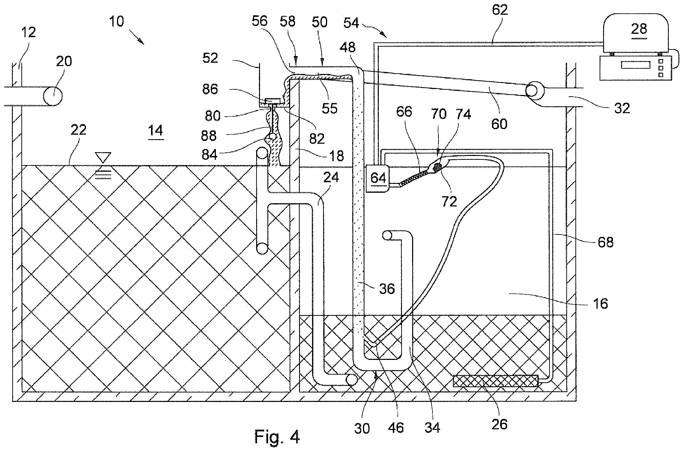

In der Situation in Fig. 1, in der der Pufferbehälter 52 leer ist, liegt der Schwimmkörper 86 auf einem Sitz über dem tiefer gelegenen Auslass 80 auf, derart, dass dieser Auslass 80 nicht durch den Schwimmkörper 86 verschlossen wird. Der tiefer gelegene Auslass 80 ist dann vollständig geöffnet, da sich auch der Ventilkörper 84 in einer unteren Stellung befindet und vom Ventilsitz entfernt ist. Füllt sich der Pufferbehälter 52 in der Situation in Fig. 4, schwimmt der Schwimmkörper 86 auf und bewegt sich mit steigendem Flüssigkeitspegel innerhalb des Pufferbehälters 52 nach oben. Bevor allerdings der Ventilkörper 84 seinen Ventilsitz erreicht, bleibt der tiefer gelegene Auslass 80 zunächst geöffnet. Wird also zunächst nur ein Förderstoß durchgeführt, in welchem ein begrenztes Schlamm- bzw. Flüssigkeitsvolumen in den Pufferbehälter 52 gelangt, kann vermieden werden, dass der Pufferbehälter 52 sich bis zu dem höher gelegenen Auslass 58 füllt, und das abgeförderte begrenzte Volumen strömt ausschließlich über den tiefer gelegenen Auslass 80 ab.

Mit Hilfe des so konstruierten Pufferbehälters 52 kann somit bei entsprechender Ansteuerung der Druckluftzufuhr ein begrenztes Schlamm- bzw. Flüssigkeitsvolumen rückgeführt werden, bevor der Klarwasserabzug über den höher gelegenen Auslass 58 beginnt.

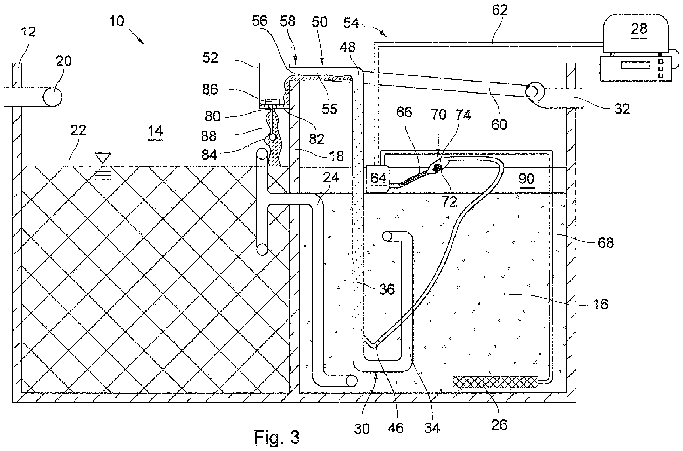

Zu diesem Zweck wird zu Beginn einer weiteren Betriebsphase ein Förderstoß durch den Verdichter 28 ausgeführt. Der Verdichter 28 wird zu diesem Zweck lediglich für einen kurzen vorbestimmten Zeitraum beschrieben. Demzufolge wird ein begrenztes Flüssigkeitsvolumen aus dem Steigrohr 36 in den Pufferbehälter 52 gefördert, wie es in Fig. 3 dargestellt ist. Das Ende des Förderstoßes wird zeitlich durch eine entsprechende Betriebssteuerung des Verdichters 28 bestimmt, um das Volumen des Schlamms zu begrenzen, der in dem Spülstoß in den Pufferbehälter 52 gelangt. Das Umschalten vom intermittierenden Belüftungsbetrieb in eine neue Betriebsphase, die einen oder mehrere Spülstöße durch den Druckheber 30 und zu einem späteren Zeitpunkt eine Periode eines kontinuierlichen Betriebs zur Klarwasserabförderung umfasst, kann durch einen Schaltimpuls eingeleitet werden, der von einem elektrischen Schalter im Pufferbehälter 52 erzeugt wird. Dieser Schalter, der in den Figuren nicht näher dargestellt ist, kann als Reed-Schalter ausgebildet sein, der an der Wand des Pufferbehälters 52 angeordnet ist und bei Überschreiten eines bestimmten Flüssigkeitspegels den Schaltimpuls auslöst. Hierbei kann bereits ein bestimmtes Flüssigkeitsvolumen im Pufferbehälter 52 genügen, um den Reed-Schalter zu schließen. Der Schaltimpuls wird also in diesem Fall unmittelbar beim Einsetzen der Abförderung von Flüssigkeit aus dem oberen Ende 48 des Steigrohrs 36 erzeugt.

Das Schlamm- bzw. Flüssigkeitsvolumen, das während des Förderstoßes in den Pufferbehälter 52 gelangt, kann durch den tiefer gelegenen Auslass 80 unmittelbar in die Vorklärkammer 14 zurückströmen, über welcher der Pufferbehälter 52 aufgehängt ist.

Nach diesem Förderstoß zur Schlammrückführung wird der Verdichter 28 für einen längeren Zeitraum abgeschaltet, so dass eine Absetzphase in der Klärkammer 16 stattfinden kann. In dieser setzt sich der Belebtschlamm am Boden der Klärkammer 16 ab, wie es schematisch in Fig. 4 gezeigt ist. Über dem Belebtschlamm bildet sich bis zu einer gewissen Tiefe unterhalb des Flüssigkeitspegels 42 eine Klarwasserzone 90 aus. Vor dem eigentlichen Klarwasserabzug können weitere relativ kurze Spülstöße stattfinden, die auf die gleiche Weise durchgeführt werden wie im Zusammenhang mit der Schlammrückführung vorstehend beschrieben.

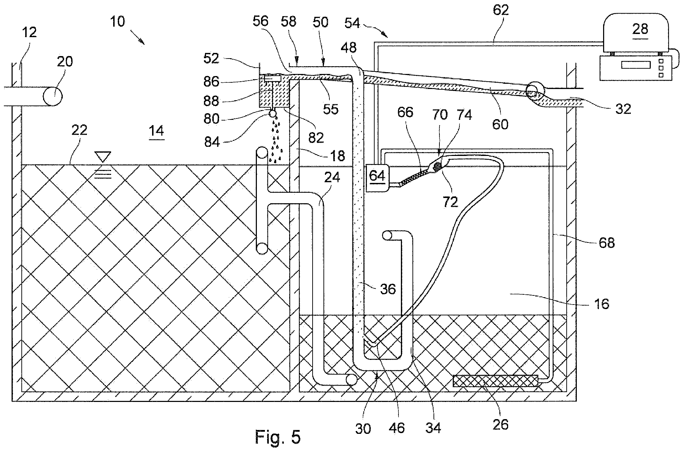

Der Klarwasserabzug ist in Fig. 5 dargestellt. Hier wird während einer längeren Betriebsperiode des Verdichters 28 kontinuierlich das Steigrohr 36 mit Druck beaufschlagt und das darin enthaltene Klarwasser über die Ablaufleitung 50 zum Klarwasserauslass 32 abgeführt. Zu Beginn dieses Vorgangs füllt sich zunächst der Pufferbehälter 52, so dass der Schwimmkörper 86 seine angehobene Stellung erreicht, in der der Ventilkörper 84 den Ventilsitz am tiefer gelegenen Auslass 80 nahezu vollständig verschließt. Füllt sich der Pufferbehälter 52 weiter, strömt das darin enthaltene Klarwasser schließlich in den höher gelegenen Auslass 58 in den Abschnitt 60 der Ablaufleitung 50, der zum Klarwasserauslass 32 führt. Durch diese kontinuierliche Förderung bleibt der Pufferbehälter 52 stets gefüllt und leert sich nahezu ausschließlich über den höher gelegenen Auslass 58. Gleichzeitig kann während des Klarwasserabzugs ein geringer Teil des Klarwassers durch den tiefer gelegenen Auslass 80 abströmen, da der Ventilkörper 84 den Ventilsitz nicht vollständig verschließt. Dies beeinträchtigt jedoch die Funktion der Anlage nicht. Das unvollständige Verschließen des tiefer gelegenen Auslasses 80 verursacht nach dem Ende des Klarwasserabzugs ein allmähliches Absinken des Schwimmkörpers 86 und damit ein erneutes Öffnen des tiefer gelegenen Auslasses 80, so dass der Pufferbehälter 52 sich dann vollständig über den tiefer gelegenen Auslass 80 entleeren kann. Auf diese Weise wird vermieden, dass in einer Situation, in der der Schwimmkörper 86 angehoben bleibt, der Pufferbehälter 52 in seinem Bodenbereich verschlossen bleibt und damit stets ein Flüssigkeitsvolumen im Pufferbehälter steht.

Denkbar wäre allerdings auch, an anderer Stelle im Bodenbereich eine kleine Bohrung vorzusehen, durch welche auch in einer vollständig geschlossenen Stellung des tiefer gelegenen Auslasses 80 stets eine geringe Flüssigkeitsmenge auslaufen kann und der Pegel im Pufferbehälter 52 so weit sinken kann, dass der Schwimmkörper 86 wieder absinkt und den Ventilkörper 84 aus seinem Ventilsitz bewegt, um den tiefer gelegenen Auslass 80 wieder vollständig zu öffnen.

Abweichend von der hier dargestellten Ausführungsform kann der Pufferbehälter 52 als Druckbehälter mit druckdichtem Deckel ausgebildet sein. In diesem Fall ist es möglich, das Klarwasser unter Druck über die Ablaufleitung 50 zum Klarwasserauslass 32 abzufördern. Dies ist insbesondere dann erwünscht, wenn kein Gefälle zum Klarwasserauslass 32 vorhanden ist, sondern dieser vielmehr in einer erhöhten Position oberhalb des Pufferbehälters 52 angeordnet ist und ein Gefälle bis zum Klarwasserauslass 32 oder hinter diesem überwunden werden muss.

Mit fortschreitendem Klarwasserabzug senkt sich der Flüssigkeitspegel 42 in der Klärkammer 16 ab, so dass das Schwimmventil 70 seine Kippstellung verändern und die erste Zweigleitung 66 verschließen kann. Die Druckluftzufuhr zum Druckluftheber 30 wird infolgedessen unterbrochen und damit auch die Abförderung von Klarwasser aus dem Steigrohr 36. Da der Pufferbehälter 52 in dieser Situation noch bis zum höher gelegenen Auslass 58 gefüllt ist, leert er sich zunächst nur durch den verbleibenden kleinen Öffnungsquerschnitt am unvollständig geschlossenen Ventilsitz des tiefer gelegenen Auslasses 80. Wird der Pegel unterschritten, der der angehobenen Position des Schwimmkörpers 86 entspricht, so dass dieser zusammen mit dem Flüssigkeitspegel weiter absinken kann, wird der Ventilkörper 84 aus dem Ventilsitz bewegt, und der Pufferbehälter 52 kann relativ schnell leer laufen, wie oben beschrieben. Der elektrische Schalter im Pufferbehälter 52 kann seinen Schaltzustand erneut ändern und einen weiteren Schaltimpuls zum Umschalten des Steuerungsverdichters 28 auf einen intermittierenden Betrieb zur Belüftung der Klärkammer 16 erzeugen, wie in Fig. 1 dargestellt. Damit beginnt ein neuer Betriebszyklus der biologischen Klärvorrichtung 10.

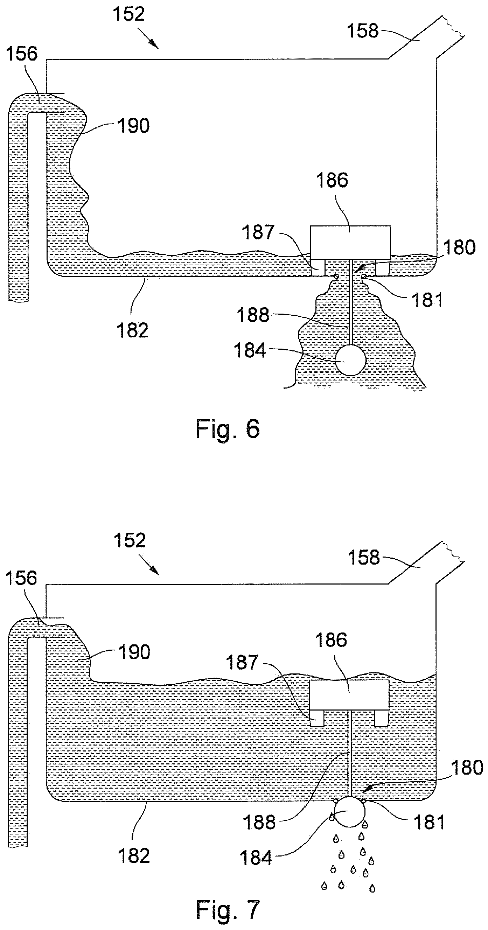

Die Figuren 6 bis 10 zeigen einen Pufferbehälter 152, der dem Pufferbehälter 52 aus den vorhergehenden Figuren 1 bis 5 in seiner Funktionsweise sehr ähnelt, hier jedoch als Druckbehälter mit verschlossenem oberen Bereich ausgebildet ist. Der Pufferbehälter 152 weist ebenfalls einen Einlass 156 im oberen Bereich des Pufferbehälters 152, einen höher gelegenen Auslass 158, der zu einem Klarwasserauslass führt, und einen tiefergelegenen Auslass 180 im Boden 182 des Pufferbehälters 152 auf. Der tiefer gelegene Auslass 180 ist als Ventilsitz 181 ausgebildet, der von unten durch einen kugelförmigen Ventilkörper 184 verschliessbar ist. Dieser kugelförmige Ventilkörper 184 hängt an einer Stange 188 unter einem Schwimmkörper 186, der in der Position in Fig. 6 auf einem Sitz 187 am Boden 182 aufliegt. Diese Position entspricht der geöffneten Stellung des tiefergelegenen Auslasses 180, in der Flüssigkeit 190, die in den Pufferbehälter 152 einströmt, frei durch den tiefergelegenen Auslass 180 abfließen kann, weil der ringförmige Strömungsquerschnitt um die Stange 188 herum relativ groß ist. Die Situation in Fig. 6 entspricht etwa derjenigen aus Fig. 2 am Ende der Belüftungsphase, bzw. Fig. 3 zu Beginn der Schlammrückführung.

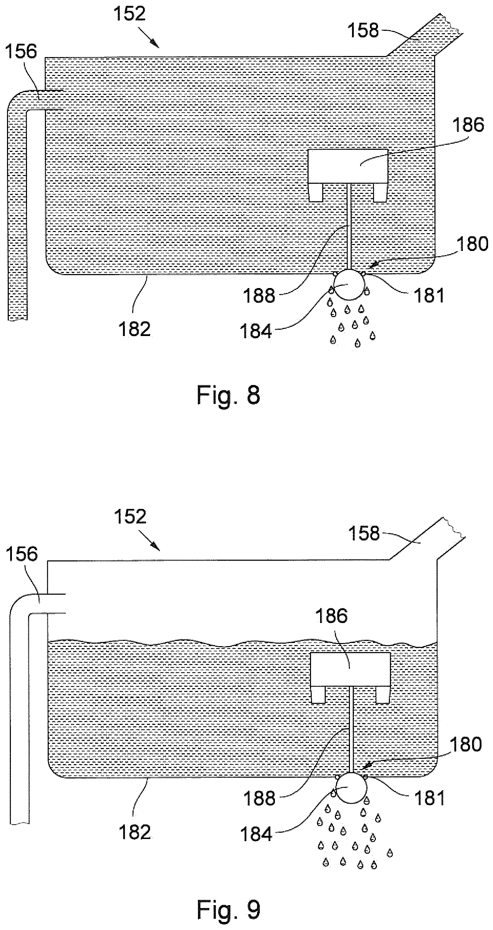

Fig. 7 zeigt eine Situation mit angehobenem Flüssigkeitsstand im Pufferbehälter 152. Hier ist der Schwimmkörper 186 in seine angehobene Stellung angehoben, in der die Ventilkugel 184 von unten gegen den Ventilsitz 181 gedrückt wird und diesen weitgehend verschließt, so dass nur ein geringer Teil der im Pufferbehälter 152 enthaltenen Flüssigkeit durch den tiefergelegenen Auslass 180 ablaufen kann. Während der weiteren Flüssigkeitszufuhr durch den Zulauf 156 steigt der Flüssigkeitspegel weiter, bis die Situation in Fig. 8 erreicht ist. Hier ist der Pufferbehälter 152 vollständig gefüllt, und die Flüssigkeit kann durch den höher gelegenen Auslass 158 abströmen. Durch eine Druckbeaufschlagung des Pufferbehälters 152 ist dies auch möglich, wenn der höher gelegene Auslass 158 sich in einer sehr hohen Position am Pufferbehälter 152 befindet und in Richtung des Klarwasserauslasses ein Gefälle überwunden werden muss.

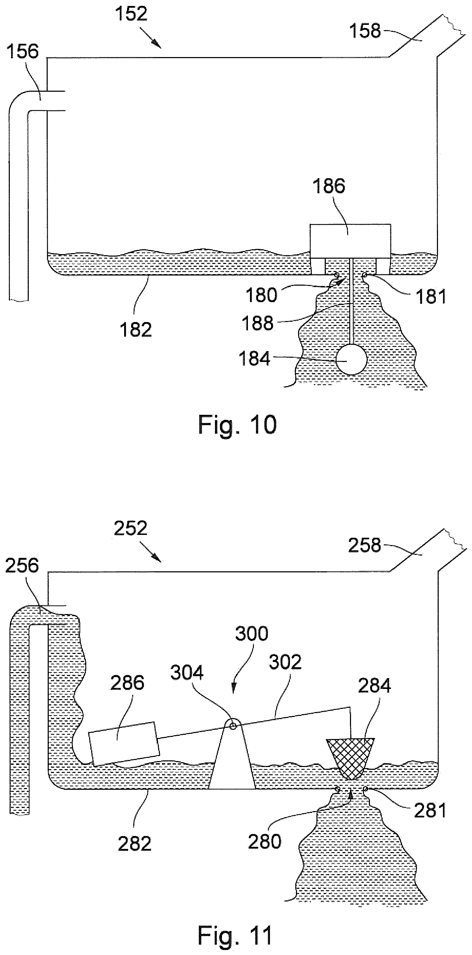

Die Situation in Fig. 9 zeigt das Leeren des Pufferbehälters 152 über den verbleibenden Strömungsquerschnitt des tiefergelegenen Auslasses 180. Dieser Vorgang findet relativ langsam statt. Erreicht der Flüssigkeitspegel die Höhe des aufgeschwommenen Schwimmkörpers 186, sinkt dieser gemeinsam weiter mit dem Flüssigkeitspegel, und die Ventilkugel 184 gibt den tiefergelegenen Auslass 180 frei, so dass der Pufferbehälter 152 über den tiefergelegenen Auslass 180 vollständig leerlaufen kann, wie es in Fig. 10 gezeigt ist.

Die Figuren 11 bis 15 zeigen eine weitere Ausführungsform eines Pufferbehälters 252, der bezüglich seiner Form und der Positionen seines Einlasses 256, seines höher gelegenen Auslasses 258 und seines tiefergelegenen Auslasses 280 ausgebildet ist, wie der vorhergehend beschriebene Pufferbehälter 152. Auch dieser Pufferbehälter 252 ist druckdicht. Allerdings ist der Mechanismus zum Verschließen des tiefergelegenen Auslasses 280 abweichend von der vorhergehend beschriebenen Ausführungsform ausgebildet, wie im folgenden erläutert werden soll.

Innerhalb des Pufferbehälters 252 befindet sich eine Wippe 300 mit einem Balken 302, der etwa in seiner Mitte kippbar in einem Schwenklager 304 gehalten wird. Wird der Balken 302 an einem seiner Enden niedergedrückt, wird das gegenüberliegende Ende angehoben. An dem in Fig. 11 linken Ende des Balkens 302 ist ein Schwimmkörper 286 angebracht, während am gegenüberliegenden rechten Ende ein Ventilkörper 284 angebracht ist. Dieser Ventilkörper 284 ist im vorliegenden Ausführungsbeispiel etwa kegelförmig und so orientiert, dass seine abgerundete Spitze nach unten weist.

Dieser Ventilkörper 284 befindet sich unmittelbar über dem Ventilsitz 281 des tiefergelegenen Auslasses 280. Wird der Ventilkörper 284 abgesenkt, verschließt er den tiefergelegenen Auslass 280 weitgehend. Dieses Absenken wird durch ein Anheben des Schwimmkörpers 286 erreicht.

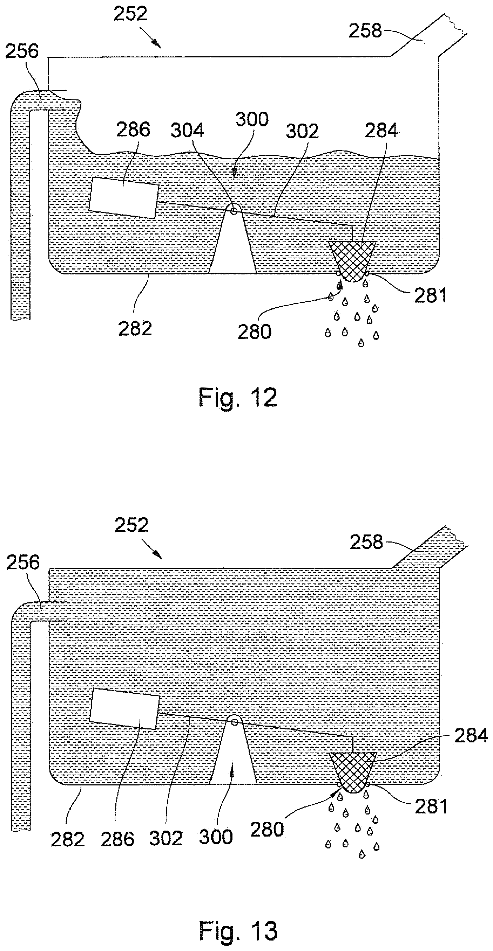

Fig. 11 zeigt eine Situation entsprechend Fig. 6, in der sich der Pufferbehälter 252 allmählich füllt. Der tiefergelegene Auslass 280 ist noch geöffnet, und die Flüssigkeit kann frei über den tiefergelegenen Auslass 280 abströmen. Steigt der Flüssigkeitspegel weiter, wie in Fig. 12 dargestellt, wird der Schwimmkörper 286 angehoben, und der Ventilkörper 284 verschließt den tiefergelegenen Auslass 280 weitgehend. In der Situation in Fig. 13 ist der Pufferbehälter 252 gefüllt, und die Flüssigkeit kann über den höher gelegenen Auslass 258 unter Druck abströmen. Dies entspricht der Situation des Klarwasserabzugs.

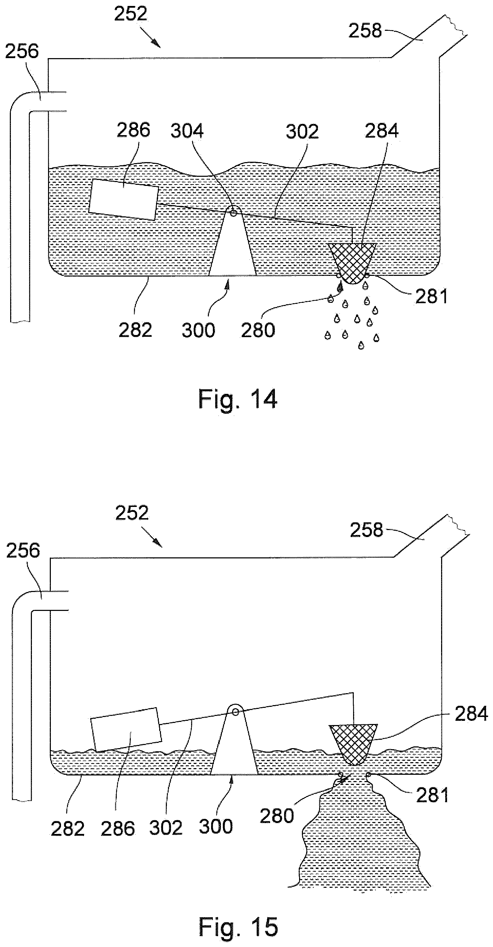

Sinkt der Flüssigkeitsstand im Pufferbehälter 252 wieder, wie in Fig. 14 gezeigt, wird schließlich durch ein Absinken des Schwimmkörpers 286 wieder die Situation in Fig. 15 erreicht, bei der der Ventilkörper 284 angehoben ist und den tiefergelegenen Auslass freigibt.

## Patentansprüche

1. Biologische Klärvorrichtung, umfassend einen Ablauf mit einer Ablaufleitung (50) zur Abförderung von gereinigtem Abwasser aus einer Klärkammer (16) zu einem Klarwasserauslass (32) und einen Pufferbehälter (52,152,252), der in die Ablaufleitung (50) integriert ist, **dadurch gekennzeichnet, dass** der Pufferbehälter (52,152,252) zwei Auslässe aufweist, nämlich einen höher gelegenen Auslass (58,158,258) oberhalb seines Bodens (82,182,282), der zum Klarwasserauslass (32) führt, und einen tiefer gelegener Auslass (80,180,280), der als Ventilsitz (181,281) ausgebildet ist und durch einen Ventilkörper (84,184,284) zumindest teilweise verschließbar ist, und dass der Pufferbehälter (52,152,252) ferner einen Schwimmkörper (86,186,286) aufweist, der innerhalb des Pufferbehälters (52,152,252) zwischen einer unteren und einer angehobenen Stellung beweglich angeordnet ist und mit dem Ventilkörper (84,184,284) derart mechanisch verbunden ist, dass der Ventilkörper (84,184,284) durch ein Anheben des Schwimmkörpers (86,186,286) gegen den Ventilsitz (181,281) bewegbar ist.

2. Biologische Klärvorrichtung gemäß Anspruch 1, **dadurch gekennzeichnet, dass** der Ventilkörper (84,184) unter dem Boden (82,182) angeordnet ist und mit dem Schwimmkörper (86,186) durch ein Zugmittel wie etwa eine Kette oder eine Stange (88,188) verbunden ist, durch welches der Ventilkörper (84,184) beim Anheben des Schwimmkörpers (86,186) von unten gegen den Ventilsitz (181) gezogen wird.

3. Biologische Klärvorrichtung gemäß Anspruch 2, **dadurch gekennzeichnet, dass** der Schwimmkörper (86,186) in der unteren Stellung auf einem Sitz (187) am Boden (82,182) über dem tiefer gelegenen Auslass (80,180) aufliegt, ohne diesen zu verschließen.

4. Biologische Klärvorrichtung gemäß Anspruch 1, **dadurch gekennzeichnet, dass** innerhalb des Behälters (252) eine Wippe (300) mit einem kippbaren Balken (302) angebracht ist, an dessem einen Ende der Schwimmkörper (286) und an dessen anderem Ende ein Ventilkörper (284) angebracht ist, der durch Anheben des Schwimmkörpers (286) auf den Ventilsitz (281) absenkbar ist.

5. Biologische Klärvorrichtung gemäß einem der Ansprüche 1 bis 4, **dadurch gekennzeichnet, dass** höher gelegene Auslass (58,158,258) oberhalb der angehobenen Stellung des Schwimmkörpers (86,186,286) angeordnet ist.

6. Biologische Klärvorrichtung gemäß einem der vorhergehenden Ansprüche, **dadurch gekennzeichnet, dass** der Pufferbehälter (152,252) zumindest an seiner Oberseite druckdicht verschlossen ist.

7. Biologische Klärvorrichtung gemäß einem der vorhergehenden Ansprüche, **dadurch gekennzeichnet, dass** der tiefer gelegene Auslass (80,180,280) des Pufferbehälters (52,152,252) zurück in die Klärkammer (16) oder zu einer Vorklärkammer (14) führt, aus welcher die Klärkammer (16) mit vorgereinigtem Abwasser gespeist wird.

8. Biologische Klärvorrichtung gemäß einem der vorhergehenden Ansprüche, **dadurch gekennzeichnet, dass** die Klärvorrichtung ferner einen Druckluftheber (30) umfasst, mit einem Steigrohr (36), an dessen Auslass die Ablaufleitung (50) angeschlossen ist.

9. Biologische Klärvorrichtung gemäß Anspruch 8, **dadurch gekennzeichnet, dass** die Klärvorrichtung eine Druckluftquelle (28) zur Druckluftbeaufschlagung des Drucklufthebers (30) umfasst.

10. Biologische Klärvorrichtung gemäß Anspruch 9, **dadurch gekennzeichnet, dass** die Klärvorrichtung einen elektrischen Schalter umfasst, der dazu vorgesehen ist, beim Öffnen und/oder Schließen einen Schaltimpuls zur Änderung des Betriebszustands der Druckluftquelle (28) zu erzeugen.

11. Biologische Klärvorrichtung gemäß Anspruch 10, **dadurch gekennzeichnet, dass** der elektrische Schalter in den Pufferbehälter (52,152,252) integriert ist und durch Überschreiten eines vorbestimmten Füllhöhe des Pufferbehälters (52,152,252) schließbar ist.

12. Biologische Klärvorrichtung gemäß Anspruch 11, **dadurch gekennzeichnet, dass** der elektrische Schalter ein Reed-Schalter ist, der auf einer Höhe oberhalb des tiefer gelegenen Auslasses (82,182,282) angeordnet ist.

13. Biologische Klärvorrichtung gemäß einem der vorhergehenden Ansprüche, **dadurch gekennzeichnet, dass** die Klärvorrichtung eine Pumpe (28) umfasst, an deren Auslass die Ablaufleitung (50) angeschlossen ist.

## Claims

1. Biological clarification device, comprising a drain with a drain line (50) for conveying purified waste water from a clarification chamber (16) to a clear water outlet (32) and a buffer tank (52,152,252) integrated into the drain line (50), **characterized in that** the buffer tank (52,152,252) comprises two outlets, namely an outlet (58,158,258) in an elevated position above the bottom (82,182,282) of the buffer tank, leading towards a clear water outlet (32), and an outlet (80,180,280) in a lower position formed as a valve seat (181,281) and provided to be closed by a valve body (84,184,284) at least partially, wherein the buffer tank (52,152,252) further comprises a floating body (86,186,286) disposed within the buffer tank (52,152,252) between a lower and an elevated position and being connected mechanically to the valve body (84,184,284) in a way that the valve body (84,184,284) is movable against the valve seat (181,281) by lifting the floating body (86,186,286).

2. Biological clarification device according to claim 1, **characterized in that** the valve body (84,184) is disposed below the bottom (82,182) and being connected to the floating body (86,186) by a pulling means like a chain or a bar (88,188), by which the valve body (84,184) is pulled against the valve seat (181) from below by lifting the floating body (86,186).

3. Biological clarification device according to claim 2, **characterized in that** the floating body (86,186) abuts in its lower position on a seat (187) at the bottom (82,182) above the lower outlet (80,180) without closing this outlet.

4. Biological clarification device according to claim 1, **characterized in that** a rocker (300) comprising a tiltable bar (302) is disposed within the tank (252), wherein at one end of the bar (302) the floating body (286) is disposed and at its opposite end the valve body (284) is disposed, which can be lowered down to the valve seat (281) by lifting the floating body (286).

5. Biological clarification device according to one of claims 1 to 4, **characterized in that** the elevated outlet (58,158,258) is disposed above the lifted position of the floating body (86,186,286).

6. Biological clarification device according to one of the preceding claims, **characterized in that** the buffer tank (152,252) is closed in a pressure tight manner at least at its top side.

7. Biological clarification device according to one of the preceding claims, **characterized in that** the lower outlet (80,180,280) of the buffer tank (52,152,252) leads back into the clarification chamber (16) or to a preliminary clarification chamber (14) from which the clarification chamber (16) is fed with pre-purified waste water.

8. Biological clarification device according to one of the preceding claims, **characterized in that** the clarification device further comprises a compressed air lifter (30) comprising a rising pipe (36), to the outlet of which the drain line (50) is connected.

9. Biological clarification device according to claim 8, **characterized in that** the clarification device further comprises an air pressure source (28) for pressurizing the compressed air lifter (30).

10. Biological clarification device according to claim 9, **characterized in that** the clarification device comprises an electric switch provided to generate a switching pulse for changing operation state of the air pressure source (28) when opening and/or closing.

11. Biological clarification device according to claim 10, **characterized in that** the electric switch is integrated into the buffer tank (52,152,252) and can be closed by exceeding a predetermined filling level of the buffer tank (52,152,252).

12. Biological clarification device according to claim 11, **characterized in that** the electric switch is a reed switch arranged at a level above the lower outlet (82,182,282).

13. Biological clarification device according to one of the preceding claims, **characterized in that** the clarification device comprises a pump (28), to the outlet of which the drain line (50) is connected.

## Revendications

1. Dispositif de clarification biologique comportant un drain avec une conduite d'évacuation (50) pour évacuer des eaux usées épurées d'une chambre de clarification (16) à une sortie d'eau clarifiée (32) et un réservoir tampon (52, 152, 252) qui est intégré dans la conduite d'évacuation (50), **caractérisé en ce que** le réservoir tampon (52, 152, 252) comporte deux sorties, à savoir une sortie qui est la plus haute (58, 158, 258) au-dessus de son fond (82, 182, 282) qui mène à la sortie d'eau clarifiée (32), et une sortie la plus basse (80, 180, 280) qui est formée comme un siège de clapet (181, 281) et qui peut être fermée au moins en partie par un corps de clapet (84, 184, 284), et **en ce que** le réservoir tampon (52, 152, 252) comporte en outre un corps flottant (86, 186, 286) qui est agencé de manière mobile à l'intérieur du réservoir tampon (52, 152, 252) entre une position basse et une position montée et qui est mécaniquement relié au corps de clapet (84, 184, 284) de telle sorte que le corps de clapet (84, 184, 284) peut être déplacé par une montée du corps flottant (86, 186, 286) contre le siège de clapet (181, 281).

2. Dispositif de clarification biologique selon la revendication 1, **caractérisé en ce que** le corps de clapet (84, 184) est agencé sous le fond (82, 182) et est relié au corps flottant (86, 186) par des moyens de traction tels qu'une chaîne ou une tige (88, 188), au moyen desquels le corps de clapet (84, 184) est tiré à partir du bas contre le siège de clapet (181) lors de la montée du corps flottant (86, 186).

3. Dispositif de clarification biologique selon la revendication 2, **caractérisé en ce que** dans la position basse, le corps flottant (86, 186) repose sur un siège (187) sur le fond (82, 182) au-dessus de la sortie la plus basse (80, 180), sans obturer celle-ci.

4. Dispositif de clarification biologique selon la revendication 1, **caractérisé en ce qu'**à l'intérieur du réservoir (252) est fixé un balancier (300) avec un barreau basculant (302), à une extrémité de laquelle est fixé le corps flottant (286) et à l'autre extrémité de laquelle est fixé un corps de clapet (284) qui peut être descendu sur le siège de clapet (281) lors de la montée du corps flottant (286).

5. Dispositif de clarification biologique selon l'une des revendications 1 à 4, **caractérisé en ce que** la sortie la plus haute (58, 158, 258) est agencée au-dessus de la position montée du corps flottant (86, 186, 286).

6. Dispositif de clarification biologique selon l'une des revendications précédentes, **caractérisé en ce que** le réservoir tampon (152, 252) est fermé de manière étanche à la pression au moins sur sa face supérieure.

7. Dispositif de clarification biologique selon l'une des revendications précédentes, **caractérisé en ce que** la sortie la plus basse (80, 180, 280) du réservoir tampon (52, 152, 252) retourne à la chambre de clarification (16) ou mène à une chambre de préclarification (14), à partir de laquelle la chambre de clarification (16) est alimentée en eaux usées pré-épurées.

8. Dispositif de clarification biologique selon l'une des revendications précédentes, **caractérisé en ce que** le dispositif de clarification comporte en outre un dispositif de relevage à air comprimé (30) avec un tube vertical (36) dont la sortie est raccordée à la conduite d'évacuation (50).

9. Dispositif de clarification biologique selon la revendication 8, **caractérisé en ce que** le dispositif de clarification comporte une source d'air comprimé (28) pour appliquer de l'air comprimé au dispositif de relevage à air comprimé (30).

10. Dispositif de clarification biologique selon la revendication 9, **caractérisé en ce que** le dispositif de clarification comporte un commutateur électrique dont l'ouverture et/ou la fermeture permet de générer une impulsion de commutation afin de changer l'état de fonctionnement de la source d'air comprimé (28).

11. Dispositif de clarification biologique selon la revendication 10, **caractérisé en ce que** le commutateur électrique est intégré dans le réservoir tampon (52, 152, 252) et peut être fermé lorsqu'une hauteur de remplissage prédéterminée du réservoir tampon (52, 152, 252) est dépassée.

12. Dispositif de clarification biologique selon la revendication 11, **caractérisé en ce que** le commutateur électrique est un commutateur à lame souple qui est agencé à une certaine hauteur au-dessus de la sortie la plus basse (82, 182, 282).

13. Dispositif de clarification biologique selon l'une des revendications précédentes, **caractérisé en ce que** le dispositif de clarification comporte une pompe (28) dont la sortie est raccordée à la conduite d'évacuation (50).
